# EUROPÄISCHE PATENTSCHRIFT

(11) **EP 0 405 159 B1**
(45) Veröffentlichungstag und Bekanntmachung des Hinweises auf die Patenterteilung: **25.08.1993**
(21) Anmeldenummer: 90110211.1
(22) Anmeldetag: 30.05.1990
(51) Int. Cl.: B60J 5/04

(54) **Kraftfahrzeugtür**
Motor vehicle door
Porte de véhicule automobile

(30) Priorität: 29.06.1989 DE 3921289
(43) Veröffentlichungstag der Anmeldung: 02.01.1991
(73) Patentinhaber: Brose Fahrzeugteile GmbH & Co. KG, 96450 Coburg (DE)
(72) Erfinder: Szerdahelyi, Ferenc, Dipl.-Ing., D-8630 Coburg (DE); Hess, Peter H., Ing. grad., D-8630 Coburg (DE); Heinemann, Rolf, D-3432 Grossalmerode (DE); Leidner, Klaus, D-8603 Jesserndorf (DE)
(74) Vertreter: Pretzell, Hellmut, Dipl.-Ing.

(56) Entgegenhaltungen:
- DE-A- 3 217 640
- DE-A- 3 402 135
- DE-A- 3 718 767
- GB-A- 2 101 535

## Beschreibung

Die Erfindung betrifft eine Kraftfahrzeugtür nach dem Oberbegriff des Anspruchs 1, bekannt aus DE-A-3 402 135.

Es ist bekannt, an sich leichtgewichtig ausgeführte, aus Stahlblech oder Kunststoff bestehende Kraftfahrzeugtüren mit einem versteifenden Tragrahmen zu versehen, der zum einen der Erhöhung der Stabilität der Kraftfahrzeugtür, um die fahrzeuginsassen besser vor unfallbedingten Verletzungen schützen zu können, und zum anderen der Aufnahme von Türanbauteilen, wie z.B. der Fensterhebevorrichtung, deren Betätigung eine stabile Anbringung voraussetzt, dient.

Aus Gründen einer möglichst kostengünstigen Fertigung kommt es bei der Gestaltung solcher Tragrahmen besonders darauf an, daß sie auf eine besonders einfache Art und Weise ohne nachteilige Beeinflußung des Montageflusses bei der Kraftfahrzeugfertigung in die Kraftfahrzeugtüren zu integrieren sind.

Aus der DE-A-32 17 640 ist eine Kraftfahrzeugtür bekannt, die aus einer Außenhaut, einem Türrahmen mit Kastenprofil, einem Aggregateträger mit horizontalen Versteifungsrohren, einer Innenverkleidung und einem am Türrahmen anzubringenden Fensterrahmen sowie einer Fensterscheibe besteht. Die Kraftfahrzeugtür ist über Scharniergelenke mit einer Fahrzeugzelle verbindbar.

Trotz der leichtgewichtig aus Stahlblech oder Kunststoff ausgeführten Außenhaut und Innenhaut der Kraftfahrzeugtür wird mittels des in sich steif ausgebildete oder mit Versteifungselementen versehenen Aggregateträgers nach dem Zusammenbau von Außenhaut und als Innenwand ausgebildeten Aggregateträger bzw. nach dem Zusammenbau von Außenhaut, Aggregateträger und Innenverkleidung ein stabiler Türkörper geschaffen. Zusätzlich erfüllt der Aggregateträger die Funktion einer Versteifung des Seitenflanke der Fahrgastzelle, in dem er als Befestigungsbasis für die Türscharniere und als Befestigungsbasis für die türseitige Riegelanordnung eines Türschlosses dient, so daß bei geschlossenen Türen seitliche Aufprallkräfte von dem steifen Aggregateträger unmittelbar in die beiden Türsäulen an beiden Türenden abgeleitet werden. In gleicher Weise werden frontale Aufprallkräfte über die Türsäulen und den steifen Aggregateträger abgeleitet.

Die beiden Versteifungsrohre des Aggregateträgers werden zu diesem Zweck mit ihren Verbindungsenden mit in der Kraftfahrzeugtür angeordneten Verbindungslaschen mittels Schraubbolzen verbunden, so daß eine starre Verbindung zwischen den Verbindungslaschen und den Versteifungsrohren hergestellt wird. Die mehrfach abgewinkelten Verbindungslaschen sind im Türrahmen fest integriert und stellen eine unmittelbare kraftschlüssige Verbindung zwischen der Krafteinleitung und den beidseitig an die Kraftfahrzeugtür angrenzenden Bereichen der Fahrzeugzelle her. Daraus ergibt sich eine einfach zu montierende Fahrzeugtür mit geringem Gewicht und einer hohen Stabilität, bei der seitliche und frontale Aufprallkräfte unmittelbar in die Karosseriesäulen abgeleitet werden.

Aus der DE-A-37 18 767 ist eine Kraftfahrzeugtür mit einem darin integrierten, gitterartigen Tragrahmen bekannt, der den eigentlichen Rumpf der Kraftfahrzeugtür bildet. Der Tragrahmen besteht aus zwei waagerechten, parallel verlaufenden Trägern, die über die Schenkel einer U-förmig verlaufenden, als Fensterrahmen dienenden Profilleiste miteinander verbunden sind. Die beiden waagerechten Träger des Tragrahmens dienen zur Aufnahme einer Fensterhebevorrichtung sowie sonstiger, zur Betätigung der Kraftfahrzeugtür notwendiger Anbauteile. Durch den Anbau einer inneren und einer äußen Abdeckung wird der Tragrahmen zur Kraftfahrzeugtür vervollständigt. Der Anschluß der Kraftfahrzeugtür an die Fahrzeugzelle erfolgt mittels Scharniergelenken, die mit den Längsenden der Träger verbunden sind.

Die bekannte Kraftfahrzeugtür ermöglicht wegen der Verwendung des Tragrahmens als Rumpfelement, welches direkt über Scharniere mit der Fahrzeugzelle verbunden ist, nicht eine vom Tragrahmen unabhängige Montage der Kraftfahrzeugtür an die Fahrzeugzelle eines Kraftfahrzeuges. Dies ist jedoch eine Voraussetzung, um eine kostengünstige und einfache Montage der Kraftfahrzeugtür aus eigenen Bauelementen des Fahrzeugherstellers und Zuliefererteilen in Modulbauweise während der Montage eines Kraftfahrzeuges zu ermöglichen.

Weiterhin ist der durch den in die Kraftfahrzeugtür integrierten Tragrahmen erzielbare Insassenschutz nur unvollkommen, da in Ermangelung einer kraftschlüssigen Integration des Tragrahmens in die Fahrzeugzelle lediglich die Steifigkeit des Tragrahmens für den Insassenschutz bei einem Seiten-Crash bzw. Seitenaufprall des Kraftfahrzeuges nutzbar ist und die Steifigkeit der Fahrzeugzelle ungenutzt bleibt.

Weiter ist aus der DE-A-34 02 135 eine Fahrzeugtüre bekannt, die eine, ggf. von einer Außenhaut gebildete Außenwand, eine Innenwand sowie einen zwischen Außen- und Innenwand angeordnete, in sich versteifte Trägerplatte umfaßt, wobei die Trägerplatte vor dem Zusammenführen von Außenwand und Innenwand mit Einbau-Aggregatteilen, insbesondere einem Fensterheber, versehbar ist und als Befestigungsbasis für zwei Türscharniere sowie für eine mittels eines Türschlosses betätigbare türseitige Riegelanordnung dient.

Die Trägerplatte ist Teil eines Versteifungskastens, an welchem die Außenwand und die Innenwand der Fahrzeugtür anbringbar sind. Der Versteifungskasten weist ferner einen oberen und einen unteren Längsträger auf, wobei der obere Längsträger das jeweils obere Türscharnier mit der jeweils oberen türseitigen Riegelanordnung und der untere Längsträger das untere Türscharnier mit einer zusätzlichen unteren Riegelanordnung verbindet. Beide Längsträger werden mittels Schraubverbindungen am Versteifungskasten bzw. der Trägerplatte befestigt, so daß seitliche oder frontale Aufprallkräfte gegebenenfalls in die an die Fahrzeugtür angrenzenden Bereiche der Fahrzeugzelle eingeleitet werden.

Auch diese bekannte Fahrzeugtür kann jedoch nicht unabhängig von der Trägerplatte bzw. dem Versteifungskasten an der Fahrzeugzelle eines Kraftfahrzeuges montiert werden, was aber im Hinblick auf eine kostengünstige Fertigung wünschenswert ist.

Aufgabe der vorliegenden Erfindung ist es, eine Kraftfahrzeugtür der eingangs genannten Gattung zu schaffen, die die Aufnahme eines die Steifigkeit der Kraftfahrzeugtür in Längs- und Querrichtung vergrößernden Tragrahmens ohne konstruktive Änderung des die Kraftfahrzeugtür aufnehmenden Türrahmens bzw. der Fahrzeugzelle ermöglicht.

Diese Aufgabe wird durch das kennzeichnende Merkmal des Anspruchs 1 gelöst.

Die erfindungsgemäße Lösung schafft eine Erhöhung der Stabilität einer Fahrzeugtür durch Anordnung eines die Kraftfahrzeugtür versteifenden Tragrahmens zur unmittelbaren Ableitung seitlicher oder frontaler Aufprallkräfte in die Karosseriesäulen, ohne daß die Anlenkpunkte der Kraftfahrzeugtür an die Karosseriesäulen verändert werden müssen. Die Verwendung von Adaptern an den Enden eines Zug- und Druckbandes ermöglicht somit die kraftschlüssige Anlenkung der Krafteinleitung an konventionelle Säulen einer Fahrzeugzelle.

Dabei wird die Versteifung der Fahrzeugzelle durch den Tragrahmen dadurch erzielt, daß ein Träger des Tragrahmens an seinen Längsenden von den in der Kraftfahrzeugtür angeordneten Krafteinleitungen aufgenommen wird, die kraftschlüssig mit den den Türausschnitt in der Fahrzeugzelle begrenzenden Säulen der Fahrzeugzelle in Kontakt stehen. Die Kraftfahrzeugtür ist mit Scharniergelenken versehen, die eine vom Tragrahmen unabhängige Montage der Kraftfahrzeugtür am Kraftfahrzeug bzw. der Fahrzeugzelle ermöglichen.

Nach einer vorteilhaften Weiterbildung ist die scharnierseitig in der Kraftfahrzeugtür angeordnete Krafteinleitung in ihrem der Säule zugewandten Endbereich schwenkbar mit dem Adapter verbunden.

Zum einen wird durch die schwenkbare Anlenkung eine sichere, kraftschlüssige Verbindung der Krafteinleitung mit dem Adapter ermöglicht, zum anderen wird die durch die Scharniergelenke ermöglichte Schwenkbewegung der Kraftfahrzeugtür nicht eingeschränkt.

Vorteilhafterweise weist der Adapter ein dem Querschnitt der Säule angepaßtes Befestigungsteil auf, das in seinem, der Kraftfahrzeugtür zugewandten Endbereich mit einem beidseitig gelagerten, sich senkrecht erstreckenden Gelenkbolzen versehen ist, der fluchtend mit einer durch die Scharniergelenke gebildeten Scharnierachse der Kraftfahrzeugtür angeordnet ist. Somit ist der Einsatz des Gelenkbolzens zur kraftschlüssigen Verbindung des Adapters mit der Krafteinleitung in jeder beliebigen Schwenkstellung der über die Scharniergelenke mit der Fahrzeugzelle verbundenen Kraftfahrzeugtür möglich. Die Installation des Tragrahmens ist dadurch erheblich vereinfacht.

Nach einem weiteren vorteilhaften Merkmal der Erfindung weist der scharnierseitige Endbereich der Krafteinleitung zwei parallele, waagerecht angeordnete Schwenkaugen auf, die um den im Adapter beidseitig gelagerten Gelenkbolzen schwenkbar sind. Hierdurch wird eine kippstabile Verbindung der Krafteinleitung mit dem Adapter geschaffen, die in der Lage ist infolge eines Crashs auf das Zug- und Druckband wirkende Kippmomente aufzunehmen.

Nach einer vorteilhaften Weiterbildung ist die schloßseitig in der Kraftfahrzeugtür angeordnete Krafteinleitung in ihrem der Säule zugewandten Endbereich über eine in Türöffnungsrichtung lösbare, kraftschlüssige Verbindung mit dem Adapter verbunden, der ein dem Querschnitt der Säule angepaßtes Befestigungsteil aufweist, das in seinem der Kraftfahrzeugtür zugewandten Endbereich mit einem in Türöffnungsrichtung ausgerichteten Zapfen versehen ist. Der Endbereich der Krafteinleitung weist demgegenüber eine senkrecht zum Zapfen ausgerichtete Fangöse auf, die den Zapfen des Adapters bei geschlossener Fahrzeugtür aufnimmt. Durch diese besondere Ausbildung der ineinandergreifenden Bereiche des Adapters und der Krafteinleitung wird erreicht, daß bei geschlossener Kraftfahrzeugtür eine kraftschlüssige Einbindung des Tragrahmens über dessen von den Krafteinleitungen aufgenommenen Zug- und Druckband in die Fahrzeugzelle gegeben ist.

Bei einem alternativen Ausführungsbeispiel des Adapters weist dieser in seinem dem Zapfen gegenüberliegenden Endbereich einen beidseitig gelagerten, senkrecht ausgerichteten Gelenkbolzen auf. Diese Gestaltung des Adapters ermöglicht es, bei einem viertürigen Kraftfahrzeug die hintere, seitliche Kraftfahrzeugtür ebenfalls mit einem in die Fahrzeugzelle integrierbaren Tragrahmen zu versehen und diesen scharnierseitig mit dem zusätzlichen Gelenkbolzen des an der Säule angebrachten Adapters zu verbinden. Die schloßseitige Verbindung des in die hintere, seitliche Kraftfahrzeugtür integrierten Tragrahmens mit der hinteren Säule der Fahrzeugzelle erfolgt dann wieder über einen Adapter, der lediglich mit einem Zapfen versehen ist.

Nach einer vorteilhaften Weiterbildung der Erfindung ist der Tragrahmen aus zwei in Türlängsrichtung verlaufenden Trägern, einem oberen Querträger und dem Zug- und Druckband gebildet, die mit voneinander beabstandet angeordneten Führungsschienen eines Doppel-Seilfensterheber-Systems versteifend miteinander verbunden sind, wobei die zur Führung einer in der Kraftfahrzeugtür angeordneten Fensterscheibe dienenden Führungsschienen so angeordnet sind, daß sie die zum Fahrzeuginnenraum gerichtete Begrenzung des Tragrahmens bilden.

Die Nutzung der Führungsschienen als integrale Bestandteile des Tragrahmens ermöglicht den Aufbau einer versteifenden Gitterstruktur mit einer geringstmöglichen Anzahl von Zusatzteilen. Zusätzlich zu den ohnehin für die Kraftfahrzeugtür benötigten Führungsschienen des Doppel-Seilfensterheber-Systems werden lediglich zwei Träger zum Aufbau des versteifenden Tragrahmens benötigt. Zusätzlich ergibt sich eine räumliche Anordnung des Tragrahmens zwischen der Ebene der Fensterscheibe und der Türaußenhaut, so daß trotz der Integration des Trag-rahmens in die Kraftfahrzeugtür eine Nutzung des Türinnenraums zwischen der Ebene der Fensterscheibe und einer Innenverkleidung der Tür als Stauraum oder zur Unterbringung von Schutzpolstern erhalten bleibt.

Eine vorteilhafte Weiterbildung der erfindungsgemäßen Lösung ist dadurch gekennzeichnet, daß der Tragrahmen als Netzverbund mit Gitterstruktur ausgebildet und in dem Bereich zwischen der Fensterscheibe der Kraftfahrzeugtür und der Türaußenhaut angeordnet ist, derart, daß der Tragrahmen unmittelbar nach einem Seitenaufprall die Aufprallkräfte aufnimmt, wobei im Türinnenbereich zwischen der Fensterscheibe, der Kraftfahrzeugtür und der Tür-Innenverkleidung bzw. Rahmenstruktur eine elastisch verformbare Insassen-Schutzeinrichtung angeordnet ist, die aus einer aufblasbaren Polsterung oder einem Airbag besteht, die vorzugsweise so ausgebildet sind, daß neben einer Querschnittsvergrößerung in Richtung auf den Insassen ein Teil der elastisch verformbaren Insassen-Schutzeinrichtung bei einem Seitenaufprall sich in Richtung der Fensterscheibe der Kraftfahrzeugtür ausdehnt.

Durch die Ausbildung des Tragrahmens als Netzverbund mit Gitterstruktur und die weit nach außen gelegte Anordnung des Tragrahmens zwischen der Türaußenhaut und der Fensterscheibe, d.h. durch bildung eines weiten Abstande zwischen der Sitzposition eines Kraftfahrzeuginsassen und dem Tragrahmen wird sichergestellt, daß der Tragrahmen frühzeitig am Energieabbau teilnimmt, d.h. wie ein Netz den Aufprall auffängt, so daß ein Höchstmaß an Insassenschutz gewährleistet wird. Die raumsparende Bauweise des Tragrahmens ermöglicht es, im Innenraum der Kraftfahrzeugtür Polsterungen zum Schutz der Insassen anzubringen. Dadurch wird einerseits vermieden, daß sich im Türinnenraum metallische Bauteile befinden, die bei einem Aufprall infolge der Reaktionskräfte und Massenträgheit erhebliche Verletzungen der Insassen bewirken könnten.

Durch den Einsatz aufblasbarer Polsterungen oder eines Airbag können zusätzliche energieabsorbierende Maßnahmen getroffen werden, die den Insassen wirksam schützen. Durch die Verwendung aufblasbarer Polsterungen oder eines Airbag wird der wirksame Querschnitt vergrößert und zusätzlich durch eine Ausdehnung dieser Insassen-Schutzeinrichtung in Richtung auf die Fensterscheibe der Kraftfahrzeugtür erreicht, daß der Kopfbereich eines Insassen vor Scheibensplittern geschützt ist und zusätzlich infolge der Massenträgheitskräfte abgefangen wird.

Nach einem vorteilhaften Merkmal der Erfindung ist zur Verbindung des oberen Querträgers und des Zug- und Druckbandes mit den Führungsschienen des Doppel-Seilfensterheber-Systems eine formschlüssige Krallverbindung vorgesehen, die vorzugsweise aus mit den Führungsschienen verbundenen Krallstücken besteht, die in korrespondierende Öffnungen des oberen Querträgers und des Zug- und Druckbandes eingreifen, bzw. oberen Querträger und Zug- und Druckband umgreifen.

Hierdurch ist eine sichere Positionierung der miteinander zu verbindenden Bauelemente des Tragrahmens ermöglicht und eine Verbindung geschaffen, die infolge des Formschlusses auch großen Belastungen standhält.

Bei einem bevorzugten Ausführungsbeispiel der Erfindung ist der Tragrahmen durch einen an dessen oberen Querträger anschließenden Dichtrahmen zur Integration einer in der Kraftfahrzeugtür angeordneten, mit dem Doppel-Seilfensterheber-System verbundenen Fensterscheibe ergänzt. Der Tragrahmen ist somit ein integraler Bestandteil eines Einbaumoduls, das das durch die Fensterscheibe komplettierte Fensterheber-System beinhaltet. Der Dichtrahmen sorgt dabei für eine sichere Führung der Fensterscheibe über den gesamten Verstellbereich des Fensterheber-Systems und bildet gleichzeitig eine zusätzliche Versteifung des Tragrahmens.

Vorteilhafte Ausgestaltungen und Weiterbildungen der Erfindung sind in den Unteransprüchen gekennzeichnet.

Die Erfindung wird nachstehend an Hand der in der Zeichnung dargestellten Ausführungsbeispiele näher erläutert. Es zeigen:
- Figur 1: eine Explosionsdarstellung einer mit einem Tragrahmen versehenen Kraftfahrzeugtür mit Anlenkung des Tragrahmens an die seitlich an die Kraftfahrzeugtür anschließenden Säulen der Fahrzeugzelle;
- Figur 2a: eine teilweise Querschnittsdarstellung des Seitenbereichs einer Fahrzeugzelle mit Draufsicht auf die die Säulen der Fahrzeugszelle miteinander verbindenden Zug- und Druckbänder der in eine vordere und hintere Seitentür eingesetzten Tragrahmen;
- Figur 2b: eine Seitenansicht des in Figur 2a dargestellten Seitenbereichs der Fahrzeugzelle;
- Figur 3: eine Querschnittsdarstellung einer Krallverbindung einer Führungsschiene eines Doppel-Seilfensterheber-Systems mit dem Zug- und Druckband des Tragrahmens;
- Figur 4: eine Seitenansicht der in Figur 3 dargestellten Krallverbindung;
- Figur 5: die Montage eines Tragrahmens in eine Kraftfahrzeugtür;
- Figur 6: eine Seitenansicht der Kraftfahrzeugtür zur Verdeutlichung des Netztverbundes unter Anwendung des Verkrallprinzips an beiden Seiten;
- Figur 7: einen Querschnitt durch die Kraftfahrzeugtür gemäß Figur 6 entlang der Linienführung X-X;
- Figur 8: eine schematische Darstellung mit einem Querschnitt durch die Kraftfahrzeugtür bei einem Seitenaufprall mit in der Kraftfahrzeugtür integriertem aufblasbaren Polster oder Airbag;
- Figur 9: einen Querschnitt durch einen mit einem Fensterrahmen mit einer Kraftfahrzeugtür verbundenen, zum Tragrahmen gehörigen Dichtrahmen;
- Figur 10: eine weiteres Ausführungsbeispiel der Verbindung des Fensterrahmens mit einem Dichtrahmen;
- Figur 11: eine Sprengzeichnung der Krallverbindung für einen Frontal- und Seitenaufprall zwischen Türkörper und oberen Querträger und
- Figur 12: eine perspektivische Darstellung der Verbindung des Dichtrahmens mit dem oberen Querträger.

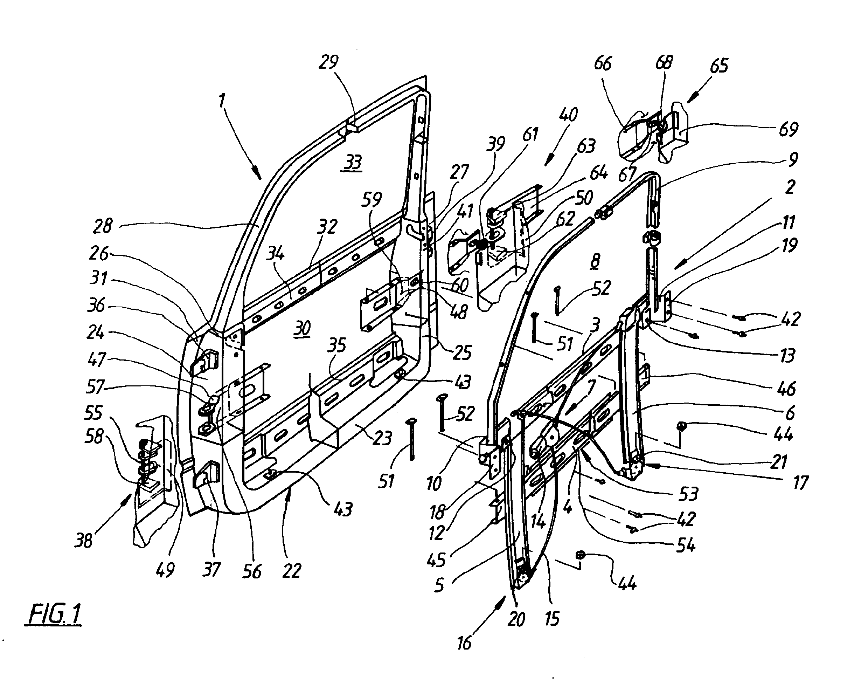

Figur 1 zeigt in einer Explosionsdarstellung eine Kraftfahrzeugtür 1 mit einem darin einsetzbaren Tragrahmen 2.

Der Tragrahmen 2 weist eine gitterartige Struktur auf und besteht aus zwei parallelen, waagerecht angeordneten Trägern, einem oberen Querträger 3 und einem Zug- und Druckband 4, die über querverlaufende, parallele Führungsschienen 5, 6 eines Doppel-Seilfensterheber-Systems 7 miteinander verbunden sind. Zur Aufnahme und Führung einer Fensterscheibe 8 ist ein sich U-förmig erstreckender Dichtrahmen 9 mit einem U-förmigen Querschnitt mit den längsseitigen Endbereichen 10, 11 des oberen Querträgers 3 verbunden. Zur vertikalen Verschiebung ist die Fensterscheibe 8 mit in den Führungsschienen 5, 6 längsgeführten Mitnehmern 12, 13 verbunden, die über ein endloses, über eine Antriebseinheit 14 antreibbares Seil 15 längs der Führungsschienen 5, 6 verschiebbar sind.

Zur Verbindung des Tragrahmens 2 mit der Kraftfahrzeugtür 1 weisen der oberen Querträger 3 in seinen Endbereichen 10, 11 sowie die Führungsschienen 5, 6 an ihren dem Fahrzeugboden zugewandten Längsenden 16, 17 Befestigungslaschen 18, 19 bzw. 20, 21 auf.

Die Kraftfahrzeugtür 1 besteht im wesentlichen aus einer U-förmigen Rahmenstruktur 22 mit einem waagerecht verlaufenden Basisholm 23 und seitlich senkrecht daran ansetzenden Schenkelholmen 24, 25, deren Enden 26, 27 in einen im wesentlichen U-förmigen Fensterrahmen 28 übergehen. Der Fensterrahmen 28 sowie die Rahmenstruktur 22 weisen ein im wesentliches U-förmiges, offenes Profil 29 auf, das durch die Verbindung mit einer Türaußenhaut 30 zu einem geschlossenen Profil wird. Zur Versteifung einer Unterkante 32 eines Fensterausschnitts 33 in der Kraftfahrzeugtür 1 sowie längs des Basisholms 23 ist jeweils ein waagerecht verlaufendes, mit der Türaußenhaut 30 verbundenes Verstärkungsblech 34 sowie ein unterer Querträger 35 vorgesehen.

Die schwenkbare Anlenkung der Kraftfahrzeugtür 1 an die hier nicht näher dargestellte Fahrzeugzelle erfolgt über Scharniergelenke 36, 37, die sowohl mit dem Schenkelholm 24 als auch mit einer benachbart angeordneten, ausschnittsweise dargestellten Kraftfahrzeug-A-Säule 38 der Fahrzeugzelle verbunden sind.

Die Verriegelung der Kraftfahrzeugtür 1 mit der Fahrzeugzelle erfolgt über ein mit dem Schenkelholm 25 verbundenes Türschloß 39, das auf an sich bekannte Weise mit einem hier nicht näher dargestellten Schloßzapfen an der dem Schenkelholm 25 benachbarten B-Säule 40 der Fahrzeugzelle in Eingriff kommt.

Zur kraftschlüssigen Verbindung des Tragrahmens 2 mit der Kraftfahrzeugtür 1 weisen die Schenkelholme 24, 25 an ihren Enden 26, 27 jeweils zwei Gewindebohrungen 41 auf, die über Schrauben 42 mit den Befestigungslaschen 18, 19 des oberen Querträgers 3 verschraubbar sind. An der Oberseite des Basisholms 23 befinden sich zwei Gewindebolzen 43, die mit den Befestigungslaschen 20, 21 an den freien Enden der Führungsschienen 5, 6 über Muttern 44 verschraubt werden.

Zur erfindungsgemäßen Anlenkung von Verbindungsenden 45, 46 des Zug- und Druckbandes 4 an die A-Säule 38 und die B-Säule 40 sind Krafteinleitungen 47, 48 vorgesehen, die die Schenkelholme 24, 25 der Kraftfahrzeugtür 1 durchdringen und über fest mit der A-Säule 38 bzw. B-Säule 40 verbundenen Adaptern 49, 50 kraftschlüssig mit der Fahrzeugzelle verbunden sind.

Die Verbindung der Krafteinleitungen 47, 48 mit den Verbindungsenden 45, 46 des Zug- und Druckbandes 4 erfolgt über jeweils zwei parallel angeordnete, voneinander beabstandete Bolzen 51, 52. Durch den Abstand der Bolzen 51, 52 voneinander ist im Verbindungsbereich zwischen dem Zug-und Druckband 4 und den Krafteinleitungen 47, 48 eine breite Basis geschaffen, die aufgrund der relativ großen Verbindungslänge zum einen eine torsionssteife, zum andern eine knicksichere Verbindung schafft.

Sowohl die Krafteinleitungen 47, 48 als auch die Verbindungsenden 45, 46 weisen ein mit der Öffnungsseite einander zugewandtes C-Profil auf, so daß im Verbindungsbereich ein torsionssteifes und knicksicheres geschlossenes Kastenprofil gebildet ist. In einem Mittelbereich 53 wird ein geschlossenes Profil durch die Verbindung des C-Profils des Zug- und Druckbandes 4 mit einem Verstärkungsblech 54 geschaffen.

Die scharnierseitige Verbindung der Krafteinleitung 47 mit dem Adapter 49 erfolgt über einen Gelenkbolzen 55. Hierzu weist ein scharnierseitiger Endbereich 56 der Krafteinleitung 47 zwei parallele, waagerecht angeordnete Schwenkaugen 57 auf, durch die der in zwei Wangen 58 des Adapters 49 gelagerte Gelenkbolzen 55 hindurchgeführt ist. Die schloßseitige Anlenkung der Krafteinleitung 48 an den mit der B-Säule 40 verbundenen Adapter 50 erfolgt über eine im Endbereich 59 der Krafteinleitung 48 angeordnete senkrecht angeordnete Fangöse 60, die einen mit dem Adapter 50 verbundenen, waagerecht verlaufenden Zapfen 61 aufnimmt.

Zusätzlich zu der Zapfenverbindung über die Fangöse 60 und den Zapfen 61 weist der in Figur 1 dargestellte, mit der B-Säule 40 verbundene Adapter 50 einen in Wangen 62 gelagerten Gelenkbolzen 63 auf, der zur Verbindung mit einer weiteren, in einer hier nicht näher dargestellten hinteren Kraftfahrzeugtür angeordneten Krafteinleitung 64 dient. Zur schloßseitigen Verbindung dieser Kraftfahrzeugtür mit einer hinteren C-Säule 65 ist eine Krafteinleitung 66 über die bereits beschriebene, aus einer Fangöse 67 und einem Zapfen 68 bestehende Zapfenverbindung mit einem Adapter 69 verbunden. Bei einem mit nur zwei Seitentüren ausgeführten Kraftfahrzeug ist der in Figur 1 dargestellte Adapter 69 mit der B-Säule 40 anstatt der C-Säule 65 der Fahrzeugzelle verbunden.

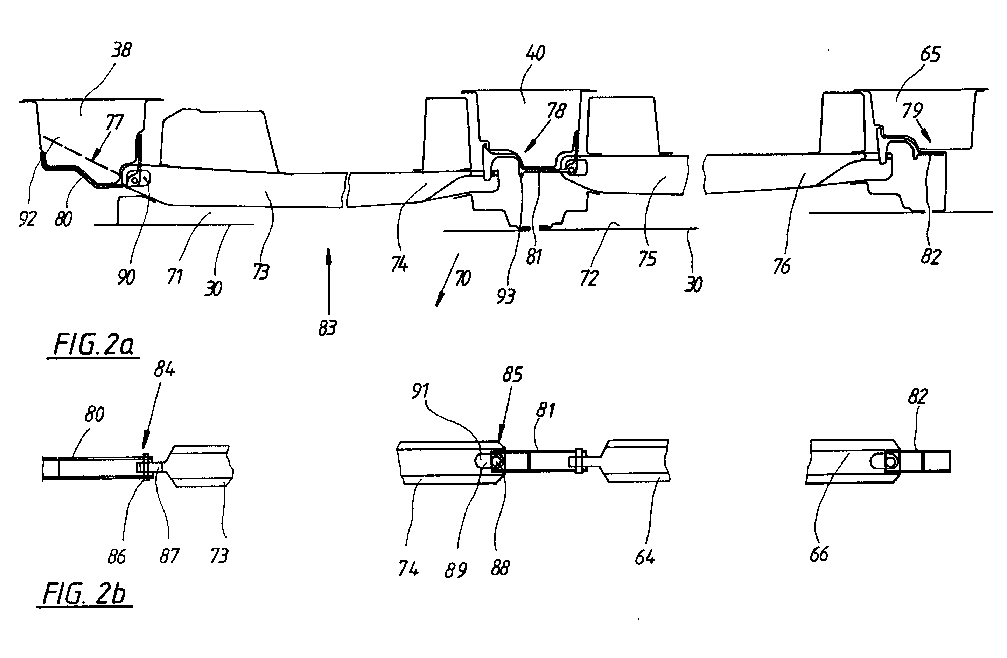

Die Figuren 2a und 2b zeigen in detaillierter Darstellung eine mögliche Ausführung der Anlenkung von Krafteinleitungen 73, 74, 75, 76 in die Säulen 38, 40, 65 einer Fahrzeugzelle.

Zwischen der A-Säule 38 und B-Säule 40 bzw. der B-Säule 40 und der C-Säule 65 ist jeweils eine Kraftfahrzeugtür 71, 72 angeordnet, deren Öffnungsrichtung durch den Pfeil 70 gekennzeichnet ist. Zur Anlenkung der Krafteinleitungen 73 bis 76 sind die Säulen 38, 40, 65 mit Adaptern 77, 78, 79 versehen, die jeweils einen Befestigungsteil 80, 81, 82 aufweisen, der fest mit den Säulen 38, 40, 65 verbunden und deren Querschnittskontur angepaßt ist.

Die über hier nicht dargestellte Zug- und Druckbänder direkt miteinander verbundenen Krafteinleitungen 73, 74 bzw. 75, 76 ermöglichen einen durch die gestrichelte Linie angedeuteten Kraftflußverlauf 92 im Seitenbereich der Fahrzeugzelle.

Bei seitlicher Krafteinwirkung, bspw. im Bereich der vorderen Kraftfahrzeugtür 71, etwa infolge eines Seitenaufpralls, wird das Zug- und Druckband 4 zusammen mit den Krafteinleitungen 73, 74 deformiert und auf Zug beansprucht. Die hieraus resultierende innere Beanspruchung wird über eine Bolzenverbindung 84 mit dem Adapter 77 und eine Zapfenverbindung 85 mit dem Adapter 78 in die Fahrzeugzelle bzw. die A-Säule 38 und die B-Säule 40 abgeleitet. Die kraftschlüssige Verbindung der Krafteinleitungen 73, 74 mit der Fahrzeugzelle ermöglicht somit eine Nutzung der Struktursteifigkeit der Fahrzeugzelle zur Reduzierung der Deformationen im Bereich der Kraftfahrzeugtür 71.

Die Bolzenverbindung 84 besteht aus einem vom Adapter 77 aufgenommenen Gelenkbolzen 86, der durch ein Schwenkauge 87 der Krafteinleitung 73 hindurchgeführt ist. Die Zapfenverbindung 85 weist einen einstückig mit dem Befestigungsteil 81 des Adapters 78 verbundenen Zapfen 88 auf, der von einer Fangöse 89 der Krafteinleitung 74 aufgenommen wird.

Sowohl das Schwenkauge 87 als auch die Fangöse 89 weisen zur Aufnahme des Gelenkbolzens 86 bzw. des Zapfens 88 eine gegenüber dem Durchmesser des Gelenkbolzens 86 bzw. des Zapfens 88 wesentlich größere Ausnehmung 90, 91 auf. Hierbei sind der Gelenkbolzen 86 und der Zapfen 88 so in den Ausnehmungen 90, 91 angeordnet, daß sie lediglich in einem den Säulen 38, 40 zugewandten, relativ kleinen Umfangsbereich mit den Lochrändern der Ausnehmungen 90, 91 in Berührung stehen.

Dies hat zur Folge, daß einerseits schon bei relativ geringer Deformation des Zug- und Druckbandes 4 in Richtung des Pfeiles 83 der Kraftfluß 92 über die Bolzenverbindung 84 und die Zapfenverbindung 85 in die Fahrzeugzelle einsetzt und diese somit am Abbau der auf die Kraftfahrzeugtür 71 von außen einwirkendenen Belastung beteiligt ist, und andererseits durch den relativ geringen Berührungsbereich, insbesondere zwischen dem Zapfen 88 und dem Lochrand der Fangöse 89, selbst nach stärkerer Deformation des Zug- und Druckbandes 4 eine Öffnung der Kraftfahrzeugtür 71 in Richtung des Pfeils 70 möglich ist, da in dem kleinen Berührungsbereich nur relativ geringe Klemmkräfte wirksam werden können.

Eine leichte Öffnung der deformierten Kraftfahrzeugtür 71 wird auch durch eine ballige Ausbildung des Lochrands der Fangöse 89 und eine sich in Öffnungsrichtung der Kraftfahrzeugtür 71 verjüngende, kegelige Gestaltung des Zapfens 88 erreicht.

Wie aus Figur 2a deutlich zu ersehen ist, sind die Krafteinleitungen 73, 74, 75, 76 im Bereich ihrer Anlenkung an die Säulen 38, 40, 65 gekröpft, so daß sie in Richtung auf die Türaußenhaut 30 der Kraftfahrzeugtüren 71, 72 vorgewölbt sind. Hiermit ist ein größtmöglicher Abstand des durch das Zug- und Druckband 4 geschaffenen Flankenschutzes von den Insassen des Kraftfahrzeuges gegeben, so daß selbst große Deformationen im Türbereich ohne eine Gefährdung der Insassen möglich sind.

Bei einem Frontalaufprall des Kraftfahrzeuges wirken das Zug- und Druckband 4 zusammen mit den Krafteinleitungen 73 bis 76 als die Fahrzeugzelle des Kraftfahrzeuges versteifende Elemente. Dabei werden das Zug- und Druckband 4 sowie die Krafteinleitungen 73 bis 76 auf Druck belastet, wobei sich der in Figur 2a dargestellte Kraftflußverlauf 92 nach einer anfänglichen Deformation der Fahrzeugzelle einstellt.

Diese Deformation führt nämlich dazu, daß der Gelenkbolzen 86 sowie der Zapfen 88 in einander zugewandten Berührungsbereichen mit den Lochrändern des Schwenkauges 87 bzw. der Fangöse 89 in Berührung stehen und so ein Kraftschluß zwischen den Krafteinleitungen 73, 74 bzw. 75, 76 und den Adaptern 77, 78 bzw. 78, 79 infolge einer Druckbeanspruchung hergestellt ist. Um bei einer extremen, durch einen Frontalaufprall verursachten Belastung eine Aufhebung des Kraftschlusses zwischen dem Zapfen 88 und der Fangöse 89 infolge eines Bauteilversagens des Zapfens 88 ausschließen zu können, ist am Adapter 78 eine Stütznase 93 vorgesehen, die dann die Funktion des Zapfens 88 übernimmt.

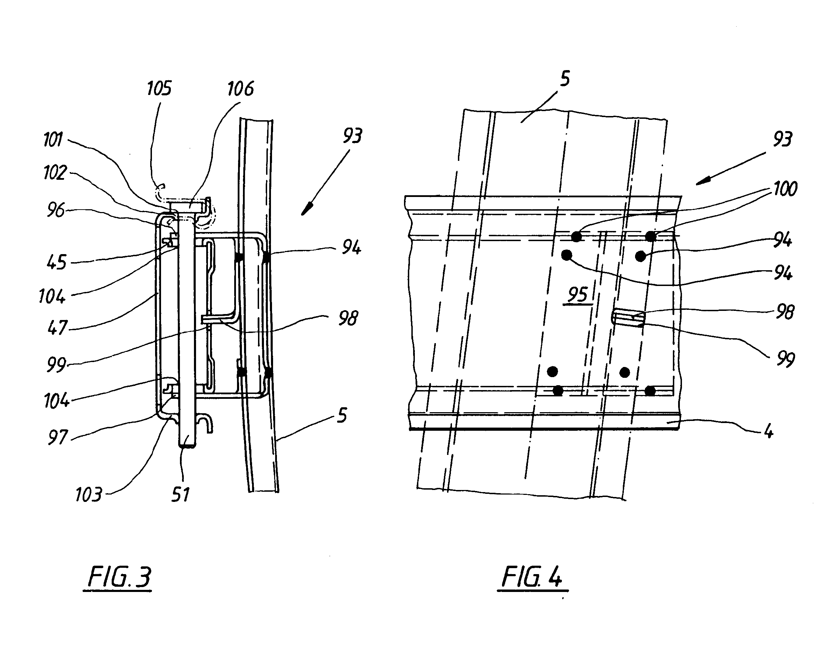

In den Figuren 3 und 4 ist ein Ausführungsbeispiel für die formschlüssigen Verbindungen zwischen den Führungsschienen 5, 6 des Doppel-Seilfensterheber-Systems 7 mit dem oberen Querträger 3 bzw. dem Zug- und Druckband 4 mittels einer Krallverbindung 93 zwischen der Führungsschiene 5 und dem Zug- und Druckband 4 im Bereich der Krafteinleitung 47 an der in Figur 1 gezeigten Kraftfahrzeugtür 1 dargestellt.

Die Krallverbindung 93 weist ein mit der Führungsschiene 5 mittels Schweißpunkten 94 verbundenes Krallstück 95 auf, das mit zwei parallelen Schenkeln 96, 97 das Zug- und Druckband 4 außen umgreift und mit einem Fortsatz 98 in eine Ausnehmung 99 des Zug- und Druckbandes 4 eindringt. Gesichert wird die Krallverbindung 93 über Schweißpunkte 100, die die Schenkel 96, 97 des Krallstücks 95 mit dem Zug- und Druckband 4 verbinden.

Diese besondere Gestaltung der Krallverbindung 93 ermöglicht eine schnelle, kostengünstige Montage des Tragrahmens 2, da durch einfaches Zusammenstecken der Führungsschiene 5 und des Zug- und Druckbandes 4 die Bauteile sicher zueinander positionierbar sind und lediglich durch Verschweißen in Schweißpunkten 100 im Bereich beider Schenkel 96, 97 des Krallstücks sicher gegeneinander fixierbar sind.

Figur 3 zeigt darüberhinaus die Verbindung der Krafteinleitung 47 mit dem Verbindungsende 45 des Zug- und Druckbandes 4. Hierbei ist der Bolzen 51 durch Aufnahmebohrungen 101 in zwei parallelen Schenkeln 102, 103 der Krafteinleitung 47 hindurchgeführt und nimmt über zwei Bohrungen 104 das zwischen den Schenkeln 102, 103 angeordnete Verbindungsende 45 des Zug- und Druckbandes 4 auf. Die Sicherung des Bolzens 51 erfolgt über eine Federsicherung 105, die einen Bolzenkopf 106 des Bolzens 51 mit seiner Auflagefläche gegen den Schenkel 102 drückt.

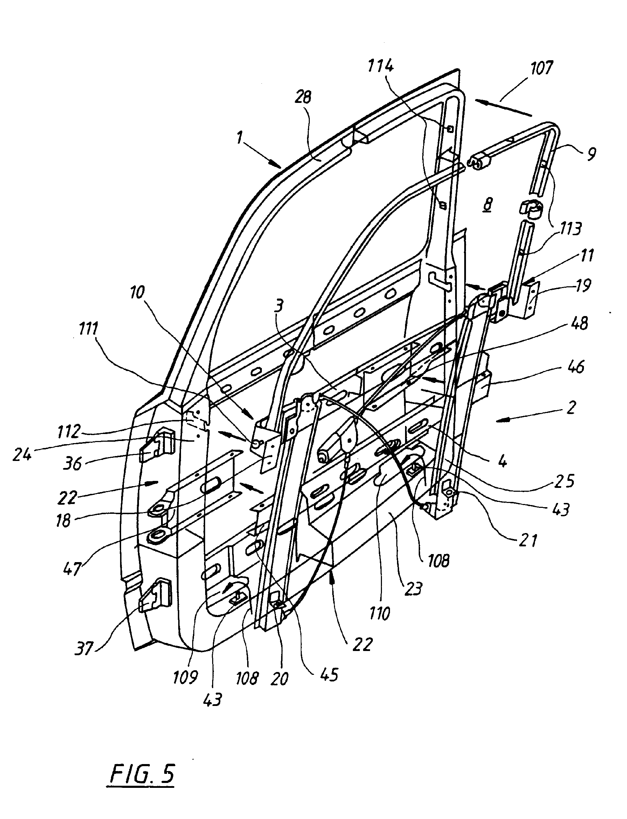

Figur 5 verdeutlicht die Montage des Tragrahmens 2 in eine Kraftfahrzeugtür 1, wobei die Montagerichtung durch die Pfeile 107 und 108 angedeutet ist.

Zur Montage ist es erforderlich, daß zunächst der Tragrahmen 2 in durch die Pfeile 108 angedeutete Art und Weise mit den freien Enden der Führungsbahnen 5, 6 in hierzu vorgesehene Ausnehmungen 109, 110 des Basisholms 23 eingesetzt wird. Gleichzeitig werden dabei die mit dem Basisholm 23 verbundenen Gewindebolzen 43 in die mit den freien Enden der Führungsschienen 5, 6 verbundenen Befestigungslaschen 20, 21 eingeführt. Anschließend wird der sich in einer relativen Schrägstellung zur Kraftfahrzeugtür 1 befindende Tragrahmen 2 durch eine Schwenkbewegung um den Basisholm 23 in die zur Verschraubung mit der Rahmenstruktur 22 der Kraftfahrzeugtür 1 erforderliche Position gebracht.

Während dieser Schwenkbewegung rasten in den Endbereichen 10, 11 des oberen Querträgers 3 angeordnete Krallstifte 111 in korrespondierende Ausnehmungen 112 an den Innenseiten der Schenkelholme 24, 25 ein und definieren somit die exakte Position des Tragrahmens 2 in der Kraftfahrzeugtür 1.

Ebenfalls gleichzeitig mit der Schwenkbewegung des Tragrahmens 2 rasten längs des Umfangs des Dichtrahmens 9 angeordnete Rastfortsätze 113 in korrespondierende Rastöffnungen 114 an der Innenseite des Fensterrahmens 28 der Kraftfahrzeugtür 1 ein. Anschließend erfolgt die Verschraubung der Befestigungslaschen 18, 19, 20, 21 des Tragrahmens 2 mit der Kraftfahrzeugtür 1 und die Verbindung der Krafteinleitungen 47, 48 mit den Verbindungsenden 45, 46 des Zug- und Druckbandes 4.

Die beschriebene Montage ermöglicht demnach eine einfache Integration des durch den Dichtrahmen 9 ergänzten Tragrahmens 2 in die Kraftfahrzeugtür 1. Die Kombination aus Tragrahmen 2 und Dichtrahmen 9 schafft durch die Aufnahme des kompletten Doppel-Seilfensterheber-Systems 7 samt Fensterscheibe 8 die Möglichkeit, ein komplettes, etwa von einem Zulieferer gefertigtes Modul, während der Montage des Kraftfahrzeuges in die Kraftfahrzeugtür 1 zu integrieren.

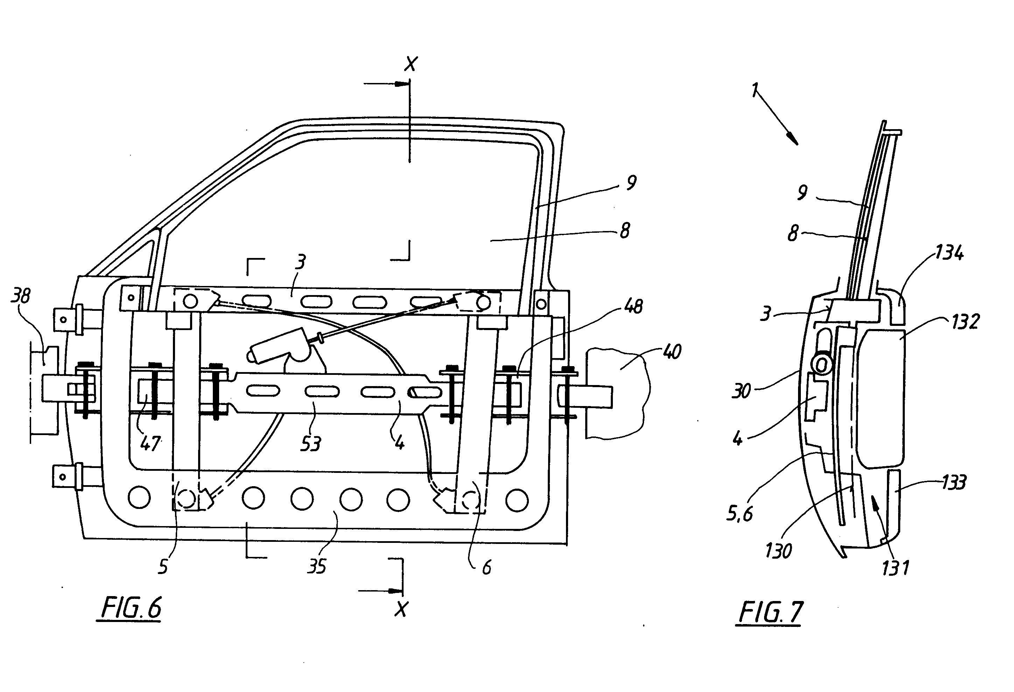

Figur 6 zeigt eine Draufsicht auf die Kraftfahrzeugtür und verdeutlicht den Netzverbund des Sicherheitsmoduls mit einem integrierten Doppelseil für einen elektrischen Fensterheber.

Wie dieser Darstellung besonders deutlich zu entnehmen ist, wird der Netzverbund aus dem oberen Querträger 3, dem Zug- und Druckband 4 sowie dem unteren Querträger 35 als waagerechte Netzverbindungen und die beiden Führungsschienen 5, 6 als senkrechte Netzverbindungen gebildet, wobei der untere Querträger 35 zur Aufnahme der unteren Enden der Führungsschienen 5, 6 des Sicherheitsmoduls dient. Dabei setzt sich das Zug- und Druckband 4 aus den Einzelteilen der Krafteinleitungen 47, 48 und dem Mittelbereich 53 zusammen, so daß eine elastische Verformbarkeit gegeben ist.

Das Zug- und Druckband 4 ist über die Krafteinleitungen 47, 48 mit der A- und B-Säule des Kraftfahrzeugs über eine Verkrallverbindung verbunden. Die Seiten- und Frontalprallträger mittig und oben bilden dabei die Schutzgitter-Struktur zur Verbesserung der Türstruktur. Im unteren Bereich wird die Struktur durch Anbringung der Führungsschienen im unteren Querträger ausgebildet.

Die außenliegende Anordnung des Sicherheitsmoduls verdeutlicht der in Figur 7 dargestellte Querschnitt durch die Kraftfahrzeugtür entlang der Linie X-X gemäß Figur 6 und zeigt, daß das Sicherheitsmodul bestehend aus dem Netzverbund von oberen Querträger 3, Zug- und Druckband 4 sowie der linken Führungsschiene 5 und der rechten Führungsschiene 6 zwischen der Türaußenhaut 30 und der Scheibenführung 130 angeordnet ist. Diese außenliegende Anordnung bewirkt eine Schutzzone als Netzverbund und bewirkt durch die weit nach außen gelegte Lage einen höchstmöglichen Insassenschutz.

Darüber hinaus bewirkt die nach außen gelegte Position des Sicherheitsmoduls eine raumsparende Bauweise, wodurch im Innenraum der Tür Hohlräume und Platz für Schutzkörper wie Polsterungen, Schaumstoffe, Airbag usw. sowie für zusätzlichen Stauraum geschaffen werden. Außerdem wird durch diese Anordnung erreicht, daß im Innenraumbereich der Kraftfahrzeugtür keine metallischen Bauteile angeordnet sind, so daß eine Verletzungsgefahr der Insassen durch scharfe und spitze Metallteile ausgeschlossen werden kann.

Figur 7 verdeutlicht die Anordnung des Schutzkörpers 132 und dessen Integration in der Tür sowie Türinnenverkleidung 133, 134, wobei diese Darstellung besonders gut erkennen läßt, daß durch die Anordnung des im wesentlichen aus dem oberen Querträger 3, dem Zug- und Druckband 4 und den diese miteinander verbindenden Führungsschienen 5 und 6 bestehenden Tragrahmens 2 zwischen einer Fensterscheibenebene 130 und der Türaußenhaut 30 ein geräumiger Türinnenraum 131 zur freien Nutzung zur Verfügung steht. Figur 7 zeigt die Nutzung des Türinnenraums 131 zur Unterbringung eines flexiblen Insassenflankenschutzes in Form eines an sich bekannten Airbag-Systems 132. Natürlich ist der Türinnenraum 131 auch zur Unterbringung andersartiger Insassenschutzsysteme oder lediglich als Stauraum nutzbar.

Wie den Darstellungen gemäß Figur 6 und 7 deutlich zu entnehmen ist, ist der Tragrahmen 2 als Netzverbund mit Gitterstruktur ausgebildet und weit nach außen vom Insassen entfernt zwischen Außenhaut und Fensterscheibe gelegt angeordnet, um damit frühzeitig am Energieabbau teilzunehmen, also wie ein Netz den Aufprall aufzufangen. Dadurch wird ein höchstmöglicher Schutz des Insassen ermöglicht.

Ein weiterer Effekt des erfindungsgemäßen Tragrahmens besteht darin, daß dieser eine raumsparende Bauweise aufweist, um im Innenraum der Tür Polsterungen zum Schutz der Insassen anzubringen. Darüber hinaus wird durch die außenliegende Anordnung des Tragrahmens 2 verhindert, daß sich im Türinnenraum metallische Bauteile befinden. Bei einem Aufprall des Insassen auf den Türkörper infolge der Reaktionskräfte und der Massenträgheit können somit metallische Teile keine Verletzung bewirken bzw. hervorrufen.

Durch eine zusätzlich angeordnete aufblasbare Polsterung als Schutzzone wird ein weiter Bereich geschaffen, der zur Aufnahme einer seitlichen Aufprallenergie dient.

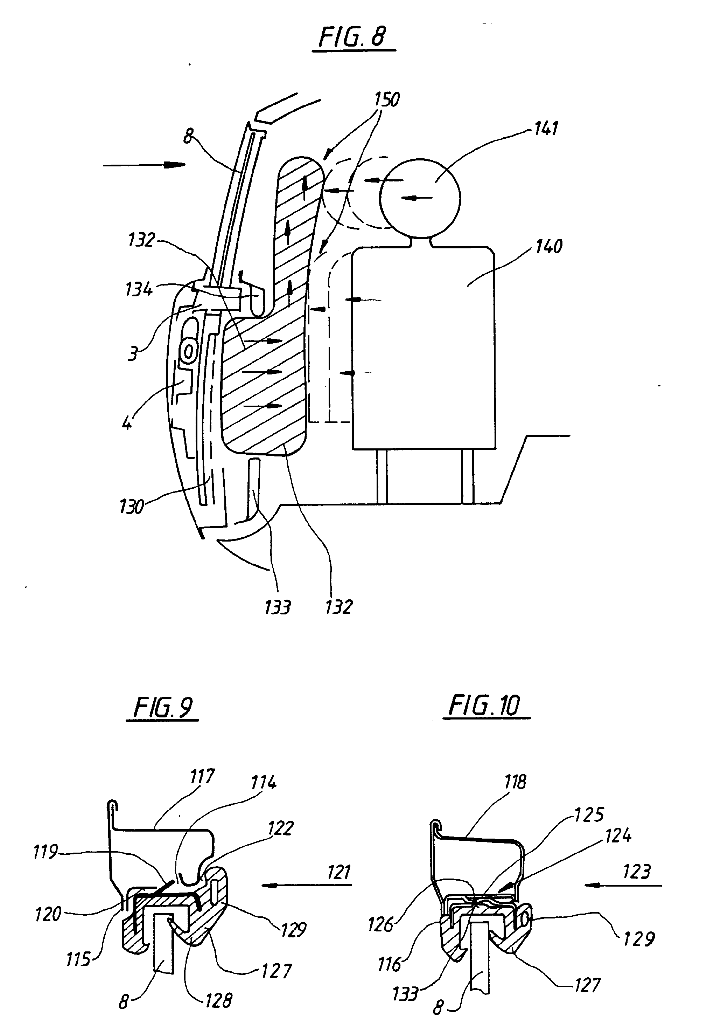

Figur 8 verdeutlicht in einer schematischen Darstellung die Wirkung einer solchen weichen Schutzzone 150 im Tür-Innenbereich bei einem in Pfeilrichtung angenommenen Seitenaufprall.

Durch die Anordnung eines aufblasbaren Schutzpolsters 132 aus Schaum für den Insassenschutz oder als alternative Anordnung eines Airbag im Bereich der Türinnenverkleidung 133, 134 wird im Falle eines Seitenaufpralls die Polsterung entsprechend den eingetragenen Pfeilen aufgeblasen, so daß ein erweiterter Querschnitt im unteren Türbereich und eine zusätzliche Prallfläche im Fensterbereich geschaffen wird. Dadurch wird bei einer Reaktionsbewegung eines Insassen 140 in Richtung der an dem Insassen 140 eingetragenen Pfeile eine weiche Schutzzone 150 geschaffen, mit der die beim Seitenaufprall auftretende Energie abgefangen und durch elastische Verformung des Schutzpolsters oder Airbags vernichtet wird.

Gleichzeitig wird dadurch verhindert, daß der Kraftfahrzeuginsasse 140 nicht mit scharfen bzw. spitzen Metallteilen in Berührung kommt, die die Verletzungsgefahr erhöhen könnten. Zusätzlich wird durch die Verlängerung des Schutzpolsters in den Bereich der Fensterscheibe 8 verhindert, daß der Kopfbereich 141 des Insassen 140 mit einer eventuell zerstörten Fensterscheibe 8 in Berührung kommt.

Die Figuren 9 und 10 zeigen in einer Querschnittsdarstellung zwei mögliche Ausführungen der Verbindung eines Dichtrahmens 115, 116 mit einem Fensterrahmen 117, 118.

Bei der Ausführung gemäß Figur 9 weist der Dichtrahmen 115 Rastfortsätze 119 auf, die infolge einer relativen Schrägstellung zu einer Dichtrahmenbasis 120 bei der Montage hinter einem Montagewulst 122 in eine Rastöffnung 114 einrasten und so entgegen der durch den Pfeil 121 angedeuteten Montagerichtung eine Sperrwirkung ausüben. Die so gestaltete Verbindung zwischen dem Fensterrahmen 117 und dem Dichtrahmen 115 ist demzufolge nicht lösbar.

Die in Figur 10 dargestellte Ausführung der Verbindung zwischen dem Fensterrahmen 118 und dem Dichtrahmen 116 ist demgegenüber entgegen der durch den Pfeil 123 angedeuteten Montagerichtung lösbar. Hierzu weist der Dichtrahmen 116 einen aus seiner Dichtrahmenbasis 124 herausragenden Fortsatz 125 auf, der bei der Montage mit einer Rastnase 133 in eine Rastöffnung 126 des Fensterrahmens 118 einrastet. Die Rastnase 133 ist derartig ausgebildet, daß diese Rastverbindung auch entgegen der Montagerichtung lösbar ist. Somit bietet diese Ausführung den Vorteil, daß, ohne Verwendung besonderer Befestigungselemente, bspw. zu Reparaturzwecken ein einfaches Lösen und anschließendes erneutes Zusammenfügen der Verbindung zwischen dem Dichtrahmen 116 und dem Fensterrahmen 118 möglich ist.

Die in den Figuren 9 und 10 dargestellten Dichtrahmen 115, 116 sind jeweils mit einer Dichtung 127 versehen. Die Dichtung 127 ist formschlüssig mit dem Dichtrahmen 115 bzw. 116 verbunden und weist einen im Querschnitt im wesentlichen U-förmig ausgebildeten Scheibendichtbereich 128 zur Abdichtung gegenüber der Fensterscheibe 8 auf, der zur Türinnenseite hin in einen Türdichtbereich 129 übergeht. Zur Erhöhung der Dichtwirkung weist der Türdichtbereich 129 einen geschlossenen Hohlquerschnitt auf.

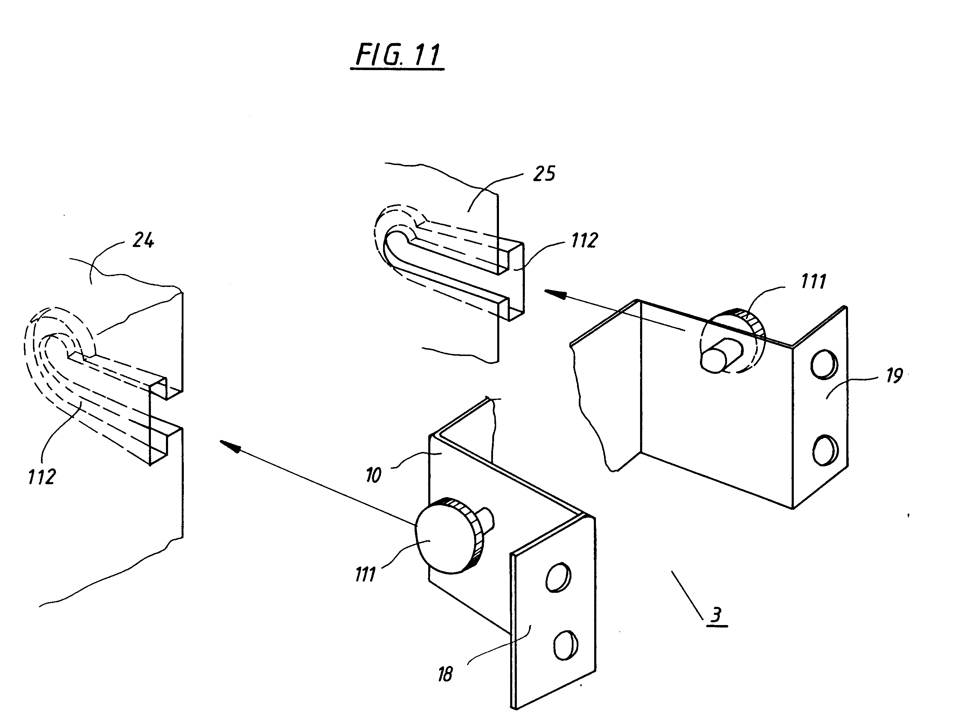

Figur 11 verdeutlicht in einer perspektivischen Sprengzeichnung die Verkrallung des oberen Querträgers 3 im vorderen und hinteren Bereich in die Türstruktur des linken und rechten Schenkelholms 24, 25.

Der obere Querträger weist im Bereich seiner Längsenden Krallstifte 111 auf, die in entsprechende Ausnehmungen 112 in den Schenkelholmen 24, 25 eingesetzt werden. Der innere Bereich der Ausnehmungen 112 weist eine Anhebung auf, so daß bei einem in die Türstruktur eingesetzten Sicherheitsmodul die Krallstifte 111 in diesem Bereich an den Schenkelholmen 24, 25 anliegen, so daß zur weiteren Sicherheit bei Seiten- und Frontalaufprall die Türstruktur zum Energieabbau herangezogen wird.

Nach erfolgtem Einsetzen des Netzverbund-Sicherheitsmoduls mit Verkrallprinzip in die Türstruktur wird der obere Querträger 3 mittels der Befestigungslaschen 18 mit den oberen Enden der Schenkelholme 24, 25 unter Verwendung der Schrauben 42 gemäß Figur 1 verbunden.

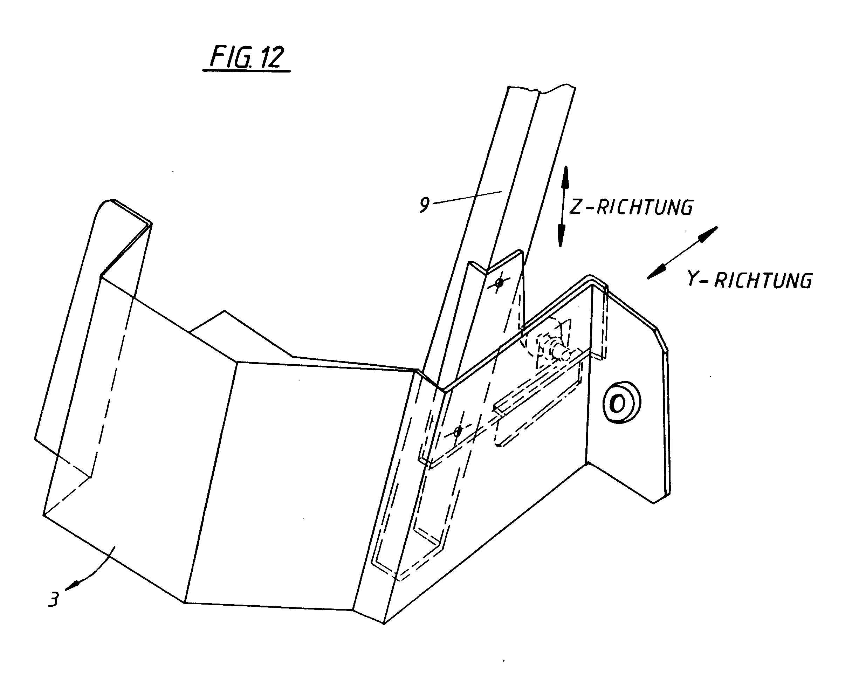

Figur 12 verdeutlicht in einer perspektivischen Darstellung die Anbindung des Dichtungsrahmens 9 am oberen Querträger 3 des Sicherheitsmoduls mit Netzverbund und Verkrallprinzip, wobei der in das gesamte Sicherheitssystem integrierte Dichtungsrahmen 9 das Sicherheitsmodul als ganzes zusätzlich versteift und durch Einhaken in den Türrahmen nach der Montage ein integriertes Sicherheitssystem zusammen mit dem Netzverbund bildet. Figur 12 zeigt die Einbindung des Dichtungsrahmens in das Sicherheitssystem im Bereich der B-Säule des Kraftfahrzeugs.

Die Erfindung beschränkt sich in ihrer Ausführung nicht auf die vorstehend angegebenen bevorzugten Ausführungsbeipiele. Vielmehr ist eine Anzahl von Varianten denkbar, welche von der dargestellten Lösung auch bei grundsätzlich anders gearteten Ausführungen Gebrauch machen.

## Patentansprüche

1. Kraftfahrzeugtür (1; 71, 72), die über Scharniergelenke mit einer Fahrzeugzelle verbunden ist und einen integrierten, gitterartigen, eine Fensterhebevorrichtung aufnehmenden Tragrahmen (2) aufweist, der in die Kraftfahrzeugtür (1; 71,72) einsetzbar ist und mindestens ein Zug- und Druckband (4) aufweist, das an seinen Verbindungsenden (45, 46) mit in der Kraftfahrzeugtür (1; 71, 72) angeordneten Krafteinleitungen (47, 48, 64, 66, 73, 74, 75, 76) verbunden ist, die in kraftschlüssigem Kontakt mit beidseitig an die Kraftfahrzeugtür (1; 71, 72) angrenzenden Säulen (38, 40, 65) der Fahrzeugzelle stehen,
**dadurch gekennzeichnet,**
daß die Krafteinleitungen (47, 48, 64, 66, 73, 74, 75, 76) die Verbindungsenden (45, 46) mindestens eines Zug- und Druckbandes (4) des Tragrahmens (2) aufnehmen und an mit den Säulen (38, 40, 65) verbundenen Adaptern (49, 50, 69 bzw. 77, 78, 79) angelenkt sind.

2. Kraftfahrzeugtür nach Anspruch 1, **dadurch gekennzeichnet**, daß die scharnierseitig in der Kraftfahrzeugtür (1; 71, 72) angeordnete Krafteinleitung (47, 64, 73, 75) in ihrem der Säule (38, 40) zugewandten Endbereich (56) schwenkbar mit dem Adapter (49, 50, 77, 78) verbunden ist.

3. Kraftfahrzeugtür nach Anspruch 1, **dadurch gekennzeichnet**, daß der Adapter (49, 77) einen dem Querschnitt der Säule (38, 40) angepaßten Befestigungsteil (80) aufweist, der in seinem der Kraftfahrzeugtür (1, 71, 72) zugewandten Endbereich mit einem beidseitig gelagerten, sich senkrecht erstreckenden Gelenkbolzen (55, 86) versehen ist, der fluchtend mit einer durch die Scharniergelenke (36, 37) gebildeten Scharnierachse der Kraftfahrzeugtür (1, 71, 72) angeordnet ist.

4. Kraftfahrzeugtür nach Anspruch 1, **dadurch gekennzeichnet**, daß der Endbereich (56) der Krafteinleitung (47, 64, 73, 75) zwei parallele, waagerecht angeordnete Schwenkaugen (57, 87) aufweist, die um den im Adapter (49, 50, 77, 78) beidseitig gelagerten, Gelenkbolzen (55, 86) schwenkbar sind.

5. Kraftfahrzeugtür nach einem der vorangehenden Ansprüche, **dadurch gekennzeichnet**, daß die schloßseitig in der Kraftfahrzeugtür (1, 71, 72) angeordnete Krafteinleitung (48, 66, 74, 76) in ihrem der Säule (40, 65) zugewandten Endbereich (59) über eine in Türöffnungsrichtung lösbare, kraftschlüssige Verbindung mit dem Adapter (50, 69, 78, 79) verbunden ist, der ein dem Querschnitt der Säule (40, 65) angepaßtes Befestigungsteil (81, 82) aufweist, das in seinem der Kraftfahrzeugtür (1; 71, 72) zugewandten Endbereich mit einem in Türöffnungsrichtung ausgerichteten Zapfen (61, 88) versehen ist, daß der Endbereich (56, 59) der Krafteinleitung (48, 66, 74, 76) eine senkrecht zum Zapfen (61, 88) ausgerichtete Fangöse (60, 89) aufweist, die den Zapfen (61, 88) des Adapters (50, 69, 78, 79) aufnimmt oder daß der Adapter (50, 78) in seinem dem Zapfen (61, 88) gegenüberliegenden Endbereich einen beidseitig gelagerten, sich senkrecht erstreckenden Gelenkbolzen (63) aufweist.

6. Kraftfahrzeugtür nach einem der vorangehenden Ansprüche, **dadurch gekennzeichnet**, daß die Ausnehmung (90, 91) der Schwenkaugen (57, 87) bzw. der Fangöse (60, 89) wesentlich größer ist als der Durchmesser des Gelenkbolzens (55, 63, 86) bzw. des Zapfens (61, 88), so daß die Schwenkaugen (57, 87) bzw. die Fangöse (60, 89) lediglich adapterseitig in einem relativ kleinen Berührungsbereich mit dem Gelenkbolzen (55, 63, 86) bzw. dem Zapfen (61, 88) in Kontakt stehen.

7. Kraftfahrzeugtür nach einem der vorangehenden Ansprüche, **dadurch gekennzeichnet**, daß die Fangöse (60, 89) in der schloßseitigen Krafteinleitung (48, 66, 74, 76) als Langloch ausgebildet ist, und daß der Lochrand des Langlochs ballig gestaltet und der in die Fangöse (60, 89) eingreifende Zapfen (61, 88) kegelförmig in Türöffnungsrichtung verjüngt ist.

8. Kraftfahrzeugtür nach einem der vorangehenden Ansprüche, **dadurch gekennzeichnet**, daß die Krafteinleitungen (47, 48, 64, 66, 73, 74, 75, 76) zur Aufnahme des Zug- und Druckbands (4) eine Kröpfung aufweisen, derart, daß das Zug- und Druckband (4) versetzt zur Befestigungsebene der Krafteinleitungen (47, 48, 64, 66, 73, 74, 75, 76) auf der vom Fahrzeuginnenraum abgewandten Seite der Führungsschienen (5, 6) angeordnet ist.

9. Kraftfahrzeugtür nach einem der vorangehenden Ansprüche, **dadurch gekennzeichnet**, daß die Verbindung zwischen dem Zug- und Druckband (4) und den seine Verbindungsenden (45, 46) aufnehmenden Krafteinleitungen (47, 48; 64, 66; 73, 74; 75, 76) über jeweils zwei parallele, in Längsrichtung des Zug- und Druckbands (4) voneinander beabstandete Bolzen (51, 52) erfolgt.

10. Kraftfahrzeugtür nach einem der vorangehenden Ansprüche, **dadurch gekennzeichnet**, daß der Tragrahmen (2) aus zwei in Türlängsrichtung verlaufenden Trägern, einem oberen Querträger (3) und dem Zug- und Druckband (4) gebildet ist, die mit voneinander beabstandet angeordneten Führungsschienen (5, 6) eines Doppel-Seilfensterheber-Systems (7) versteifend miteinander verbunden sind, wobei die zur Führung einer in der Kraftfahrzeugtür (1; 71, 72) angeordneten Fensterscheibe (8) dienenden Führungsschienen (5, 6) die zum Fahrzeuginnenraum gerichtete Begrenzung des Tragrahmens (2) bilden.

11. Kraftfahrzeugtür nach einem der vorangehenden Ansprüche, **dadurch gekennzeichnet**, daß der Tragrahmen (2) als Netzverbund mit Gitterstruktur ausgebildet ist und in dem Bereich zwischen der Fensterscheibe (8) der Kraftfahrzeugtür (1; 71, 72) und der Türaußenhaut (30) angeordnet ist, derart, daß der Tragrahmen (2) unmittelbar nach einem Seitenaufprall die Aufprallkräfte aufnimmt, wobei im Türinnenbereich zwischen der Fensterscheibe (8) der Kraftfahrzeugtür (1; 71, 72) und der Tür-Innenverkleidung (133, 134) bzw. Rahmenstruktur (22) eine elastisch verformbare Insassen-Schutzeinrichtung (132) angeordnet ist.

12. Kraftfahrzeugtür nach Anspruch 11, **dadurch gekennzeichnet**, daß die elastisch verformbare Insassen-Schutzeinrichtung (132) aus einer aufblasbaren Polsterung oder einem Airbag besteht, die vorzugsweise so ausgebildet sind, daß neben einer Querschnittsvergrößerung in Richtung auf den Insassen (140, 141) ein Teil der elastisch verformbaren Insassen-Schutzeinrichtung (132) bei einem Seitenaufprall sich in Richtung der Fensterscheibe (8) der Kraftfahrzeugtür (1; 71, 72) ausdehnt.

13. Kraftfahrzeugtür nach Anspruch 10, **dadurch gekennzeichnet**, daß zwischen dem oberen Querträger (3) und dem Zug- und Druckband (4) einerseits und den Führungsschienen (5, 6) des Doppel-Seilfensterheber-Systems (7) andererseits eine formschlüssige Krallverbindung (93) vorgesehen ist, die aus mit den Führungsschienen (5, 6) verbundenen Krallstücken (95) besteht, die in korrespondierende Öffnungen des oberen Querträgers (3) und des Zug- und Druckbandes (4) eingreifen, bzw. den oberen Querträger (3) und das Zug- und Druckband (4) umgreifen.

14. Kraftfahrzeugtür nach Anspruch 13, **dadurch gekennzeichnet**, daß die Krallverbindung (111, 112) aus Krallstiften (111) im oberen Querträger (3) und entsprechenden Ausnehmungen (112) im linken und rechten Schenkelholm (24, 25) der Kraftfahrzeugtür (1; 71, 72) besteht.

15. Kraftfahrzeugtür nach einem der vorangehenden Ansprüche, **dadurch gekennzeichnet**, daß der Tragrahmen (2) durch einen an den oberen Querträger (3) anschließenden Dichtrahmen (9, 115, 116) zur Integration der in der Kraftfahrzeugtür (1, 71, 72) angeordneten, mit dem Doppel-Seilfensterheber-System (7) verbundenen Fensterscheibe (8) aufweist, der aus einem im wesentlichen U-förmigen Profil besteht und längs seines Umfangs verteilte Rastfortsätze (113, 119, 125) zum Einrasten in korrespondierende Rastöffnungen (114, 126) eines den Dichtrahmen (9) aufnehmenden Fensterrahmens (28, 117, 118) der Kraftfahrzeugtür (1; 71, 72) aufweist.

## Claims

1. Motor vehicle door (1; 71,72) which is connected by hinged joints to a vehicle body and has an integrated gridlike support frame (2) housing a window winder mechanism and insertable into the vehicle door (1; 71,72) wherein the support frame has at least one tension and compression brace (4) which is connected at its connecting ends (45,46) to force application points (47, 48, 64, 66, 73, 74, 75, 76) which are mounted in the vehicle door (1; 71, 72) and which are in force-locking contact with the pillars (38, 40, 65) of the vehicle body adjoining the door (1; 71, 72) on each side,
characterised in that the force application points (47, 48, 64, 73, 74, 75, 76) hold the connecting ends (45, 46) of at least one tension and compression brace (4) of the support frame (2) and are attached to adaptors (49, 50, 69 and 77, 78, 79) connected to the pillars (38, 40, 65).

2. Vehicle door according to claim 1, characterised in that the force inlet (47, ,64, 74, 75) mounted on the hinge side in the door (1; 71,72) is connected for swivel movement to the adaptor (49, 50, 77, 78) in its end area (56) facing the pillar (38, 40).

3. Vehicle door according to claim 1, characterised in that the adaptor (49, 77) has a fixing part (80) which matches the cross-section of the pillar (38,40) and which is provided in its end area facing the vehicle door (1, 71, 72) with vertically extending articulated bolts (55, 86) which are mounted on each side in alignment with a hinge axis of the door (1, 71, 72) formed by the hinged joints (36,37).

4. Vehicle door according to claim 1 characterised in that the end area (56) of the force inlet (47, 64, 73, 75) has two parallel horizontally mounted swivel eyes (57, 87) which can swivel about the articulated bolts (55, 86) mounted on both sides in the adaptor (49, 50, 77, 78).

5. Vehicle door according to one of the preceding claims, characterised in that the force inlet (48,66, 74, 76) mounted on the lock side in the vehicle door (1, 71, 72) is connected in its end area (59) facing the pillar (40, 65) by a force-locking connection releasable in the door opening direction to the adaptor (50, 69, 78, 79) which has a fixing part (81, 82) which matches the cross-section of the pillar (40, 65) and which is provided in its end area facing the vehicle door (1; 71, 72) with a pin (61, 68) aligned in the door opening direction, that the end area (56) of the force inlet (48, 66, 74, 76) has a catch eyelet (60, 89) which is aligned perpendicular to the pin (61, 88) and which receives the pin (61, 88) of the adaptor (50, 69, 78, 79) or that the adaptor (50, 78) has in its end area opposite the pin (61, 88) a vertically extending articulated bolt (63) supported on each side.

6. Vehicle door according to one of the preceding claims, characterised in that the recess (90,91) of the swivel eyes (57, 87) or catch eyelet (60, 89) is substantially larger than the diameter of the articulated bolt (55, 63, 86) or of the pin (61, 88) so that the swivel eyes (57, 87) or the catch eyelet (60, 89) can only come into contact with the articulated bolt (55, 63, 86) or the pin (61,88) on the adaptor side in a relatively small contact area.

7. Vehicle door according to one of the preceding claims, characterised in that the catch eyelet (60, 89) in the force inlet (48, 66, 74, 76) on the lock side is designed as an oblong hole and that the hole edge of the oblong hole is ball-shaped and the pin (61, 88) engaging in the catch eyelet (60, 89) is tapered conically in the-door opening direction.

8. Vehicle door according to one of the preceding claims, characterised in that the force application points (47, 48, 64, 66, 73, 74, 75, 76) are angled for holding the tension and compression brace (4) so that said brace (4) is mounted off-set relative to the fixing plane of the force application points (47, 48, 64, 66, 73, 74, 75, 76) on the side of the guide rials (5,6) remote from the vehicle interior.

9. Vehicle door according to one of the preceding claims, characterised in that the connections between the tension and compression brace (4) and the force application points (47, 48; 64, 66; 73, 74, 75, 76) holding the connecting ends (45, 46) thereof are each made by two parallel bolts (51, 52) spaced out from each other in the longitudinal direction of the tension and pressure brace (4).

10. Vehicle door according to one of the preceding claims, characterised in that the support frame (2) is formed from two supports running in the longitudinal direction of the door, an upper transverse support (3) and the tension and compression brace (4), which are connected together for reinforcement with the spaced guide rails (5,6) of a twin cable window winder system (7) wherein the guide rails (5,6) serving to guide a window pane (8) mounted in the vehicle door (1; 71, 72) form the boundary of the support frame (2) directed towards the inside of the vehicle.

11. Vehicle door according to one of the preceding claims, characterised in that the support frame (2) is designed as a compound mesh unit with grid structure and is mounted in the area between the window pane (8) of the vehicle door (1; 71, 72) and the outer skin (30) of the door so that after a side impact the support frame (2) directly takes up the impact forces wherein an elastically deformable passenger protection device (132) is mounted in the inside of the door between the window pane (8) of the vehicle door (1; 71, 72) and the inner lining (133, 134) of the door or the frame structure (22).

12. Vehicle door according to claim 11 characterised in that the elastically deformable passenger protection device (132) consists of an inflatable cushion or a air bag which are preferably designed so that in the event of a side impact, in addition to a cross-sectional increase in the direction of the passenger (140, 141), a part of the elastically deformable passenger protection device (132) extends in the direction of the window pane (8) of the vehicle door (1; 71, 72).

13. Vehicle door according to claim 10 characterised in that between the upper transverse support (3) and the tension and compression brace (4) on the one side and the guide rails (5,6) of the twin cable window winder system (7) on the other there is a positive claw connection (93) which consists of claw members (95) which are connected to the guide rails (5,6) and which engage in corresponding openings in the upper transverse support (3) and tension and compression brace (4), or engage round the upper transverse support (3) and the tension and compression brace (4).

14. Vehicle door according to claim 13 characterised in that the claw connection (111, 112) consists of claw pins (111) in the upper transverse support (3) and corresponding recesses (112) in the left and right hand vertical strut (24,25) of the vehicle door (1; 71, 72).

15. Vehicle door according to one of the preceding claims, characterised in that the support frame (2) has a sealing frame (9, 115, 116) adjoining the upper transverse support (3) for integration of the window pane (8) which is mounted in the vehicle door (1, 71, 72) and is connected to the twin cable window winder system (7), wherein the sealing frame consists of a substantially U-shaped profiled section and has spread out along the circumference detent projections (113, 119, 125) for engaging in corresponding detent openings (114, 126) of a window frame (28, 117, 118) of the vehicle door (1; 71, 72) housing the sealing frame (9).

## Revendications

1. Portière de véhicule automobile (1; 71, 72) raccordée par des articulations à charnière à une cellule de véhicule et présentant un cadre porteur (2) intégré, en un genre de treillis, qui loge un dispositif de lève-vitre, qui peut être inséré dans la portière de véhicule automobile (1; 71, 72) et qui présente au moins une bande de traction et de poussée (4) raccordée à ses extrémités (45, 46) à des dispositifs d'induction de force (47, 48, 64, 66, 73, 74, 75, 76) qui sont en contact, par une liaison par la force, avec des colonnes (38, 40, 65) de la cellule du véhicule contiguës des deux côtés à la portière du véhicule (1; 71, 72), caractérisée en ce que les dispositifs d'induction d'une force (47, 48, 64, 66, 73, 74, 75, 76) reçoivent les extrémités de raccordement (45, 46) d'au moins une bande de traction et de poussée (4) du cadre porteur (2) et en ce qu'ils sont articulés sur des adaptateurs (49, 50, 69 et respectivement 77, 78, 79) raccordés aux colonnes (38, 40, 65).

2. Portière de véhicule automobile suivant la revendication 1, caractérisée en ce que le dispositif d'induction de force (47, 64, 73, 75) agencé du côté de la charnière dans la portière de véhicule automobile (1; 71, 72) est raccordé, à l'adaptateur (49, 50, 77, 78), de façon à pouvoir pivoter dans sa zone d'extrémité (56) tournée vers la colonne (38, 40).

3. Portière de véhicule automobile suivant la revendication 1, caractérisée en ce que l'adaptateur (49, 77) présente un élément de fixation (80) qui est adapté à la section transversale de la colonne (38, 40) et qui est pourvu dans sa zone d'extrémité tournée vers la portière de véhicule automobile (1, 71, 72) d'un boulon d'articulation (55, 86) qui est supporté de deux côtés, qui s'étend verticalement et qui est agencé en alignement avec un axe de charnière de la portière du véhicule automobile (1, 71, 72) formé par l'articulation de charnière (36, 37).

4. Portière de véhicule automobile suivant la revendication 1, caractérisée en ce que la zone d'extrémité (56) du dispositif d'induction de force (47, 64, 73, 75) présente deux oeillets de pivotement (57, 87) parallèles qui sont agencés horizontalement et qui peuvent être pivotés autour du boulon d'articulation (55, 86) supporté des deux côtés dans l'adaptateur (49, 50, 77, 78).

5. Portière de véhicule automobile suivant l'une des revendications précédentes, caractérisée en ce que le dispositif d'induction de force (48, 66, 74, 76) agencé du côté de la serrure dans la portière de véhicule automobile (1, 71, 72) est raccordé dans sa zone d'extrémité (59) tournée vers la colonne (40, 65), par l'intermédiaire d'un raccordement, à liaison par la force, détachable dans le sens de l'ouverture de la portière, à l'adaptateur (50, 69, 78, 79) qui présente un élément de fixation (81, 82) adapté à la section transversale de la colonne (40, 65) et pourvu dans sa zone d'extrémité tournée vers la portière de véhicule (1; 71, 72) d'une broche (61, 88) orientée dans le sens d'ouverture de la portière, en ce que la zone d'extrémité (56) du dispositif d'induction de force (48, 66, 74, 76) présente un oeillet d'arrêt (60, 89) qui est orienté perpendiculairement à la broche (61, 88) et qui reçoit la broche (61, 88) de l'adaptateur (50, 69, 78, 79) ou en ce que l'adaptateur (50, 78) présente dans sa zone d'extrémité située à l'opposé de la broche (61, 88) un boulon d'articulation (63) supporté de deux côtés et s'étendant verticalement.

6. Portière de véhicule automobile suivant l'une des revendications précédentes, caractérisée en ce que l'évidement (90, 91) des oeillets de pivotement (57, 87) ou des oeillets d'arrêt (60, 89) est sensiblement supérieur au diamètre du boulon d'articulation (55, 63, 86) ou respectivement de la broche (61, 88), de sorte que les oeillets de pivotement (57, 87) ou respectivement les oeillets d'arrêt (60, 89) soient purement en contact du côté de l'adaptateur, dans une zone de contact relativement petite, avec le boulon d'articulation (55, 63, 86) ou respectivement la broche (61, 88).

7. Portière de véhicule automobile suivant l'une des revendications précédentes, caractérisée en ce que l'oeillet d'arrêt (60, 89) est réalisé sous la forme d'un trou oblong dans le dispositif d'induction de force (48, 66, 74, 76) du côté de la serrure et en ce que le bord du trou oblong est façonné de façon convexe et la broche (61, 88) qui pénètre dans l'oeillet d'arrêt (60, 89) se rétrécit en forme de cône dans le sens de l'ouverture de la portière.

8. Portière de véhicule automobile suivant l'une des revendications précédentes, caractérisée en ce que les dispositifs d'induction de force (47, 48, 64, 66, 73, 74, 75, 76) présentent un coude pour le logement de la bande de traction et de poussée (4) de façon que la bande de traction et de poussée (4) soit agencée de manière décalée par rapport au plan de fixation des dispositifs d'induction de force (47, 48, 64, 66, 73, 74, 75, 76), sur le côté des rails de guidage (5, 6) tourné à l'écart de l'espace intérieur du véhicule.

9. Portière de véhicule automobile suivant l'une des revendications précédentes, caractérisée en ce que le raccordement entre la bande de traction et de poussée (4) et les dispositifs d'induction de force (47, 48; 64, 66; 73, 74; 75, 76) qui reçoivent ses extrémités de raccordement (45, 46) a lieu par l'intermédiaire de chaque fois deux boulons (51, 52) parallèles écartés l'un de l'autre dans le sens longitudinal de la bande de traction et de poussée (4).

10. Portière de véhicule automobile suivant l'une des revendications précédentes, caractérisée en ce que le cadre porteur (2) est formé par deux supports s'étendant dans la direction longitudinale de la portière, un support transversal supérieur (3) et la bande de traction et de poussée (4), qui sont raccordés entre eux de façon rigidifiante par des rails de guidage (5, 6) d'un système (7) de lève-vitre à câble double agencés à distance l'un de l'autre, les rails de guidage (5, 6) qui servent au guidage d'une vitre (8) agencée dans la portière de véhicule automobile (1; 71, 72) formant la délimitation du cadre porteur (2) orientée vers l'espace interne du véhicule.

11. Portière de véhicule automobile suivant l'une des revendications précédentes, caractérisée en ce que le cadre porteur (2) est réalisé sous la forme d'un assemblage en treillis avec une structure de treillis et est agencé dans la zone entre la vitre (8) de la portière de véhicule automobile (1; 71, 72) et l'enveloppe externe de portière (30) de façon que le cadre porteur (2) reprenne directement après une collision latérale les efforts de la collision, un dispositif de protection d'occupants élastiquement déformable étant agencé dans la zone interne de la portière, entre la vitre (8) de la portière de véhicule (1; 71, 72) et le revêtement interne de la portière (133, 134) ou la structure de cadre (22).

12. Portière de véhicule automobile suivant la revendication 11, caractérisée en ce que le dispositif de protection des occupants (132) élastiquement déformable est constitué d'un rembourrage gonflable ou d'un airbag, qui sont réalisés de préférence de façon qu'outre un grossissement de section transversale dans le sens des occupants (140, 141), une partie du dispositif de protection de passagers (132) élastiquement déformable s'étende en direction de la vitre (8) de la portière de véhicule automobile (1; 71, 72) lors d'une collision latérale.

13. Portière de véhicule automobile suivant la revendication 10, caractérisée en ce qu'entre le support transversal supérieur (3) et la bande de traction et de poussée (4) d'une part et les rails de guidage (5, 6) du système de lève-vitre à câble double (7) d'autre part, il est prévu un raccordement à griffe (93) réalisé par une liaison par la forme et constitué d'éléments de griffe (95) raccordés aux rails de guidage (5, 6) et pénétrant dans des ouvertures correspondantes du support transversal supérieur (3) et de la bande de traction et de poussée (4) ou entourant le support transversal supérieur (3) et la bande de traction et de poussée (4).

14. Portière de véhicule automobile suivant la revendication 13, caractérisée en ce que le raccordement à griffe (111, 112) est constitué de chevilles de griffe (111), dans le support transversal supérieur (3), et de logements correspondants (112) dans les longerons latéraux de gauche et de droite (24, 25) de la portière de véhicule automobile (1; 71, 72).

15. Portière de véhicule automobile suivant l'une des revendications précédentes, caractérisée en ce que le cadre porteur (2) présente, pour l'intégration de la vitre (8) agencée dans la portière de véhicule automobile (1; 71, 72) et raccordée au système de lève-vitre à câble double (7), un cadre d'étanchéité (9, 115, 116), qui se raccorde au support transversal supérieur (3) qui est constitué d'un profilé sensiblement en forme de U et qui présente des saillies d'accrochage (113, 119, 125) réparties le long de sa périphérie pour l'accrochage dans des ouvertures d'accrochage (114, 126) correspondantes d'un cadre de fenêtre (28, 117, 118), de la portière de véhicule automobile (1; 71, 72), qui reçoit le cadre d'étanchéité (9).
